# EUROPEAN PATENT SPECIFICATION

(11) **EP 1 788 024 B1**
(45) Date of publication and mention of the grant of the patent: **10.06.2015**
(21) Application number: 05782261.1
(22) Date of filing: 07.09.2005
(51) Int. Cl.: C08L 23/10, C08K 3/34, C08K 7/00

(54) **PROCESS FOR PRODUCING POLYPROPYLENE RESIN COMPOSITION**
HERSTELLUNGSVERFAHREN FÜR POLYPROPYLENHARZZUSAMMENSETZUNG
PROCÉDÉ DE PRÉPARATION D'UNE COMPOSITION DE RÉSINE DE POLYPROPYLÈNE

(30) Priority: 08.09.2004 JP 2004260695
(43) Date of publication of application: 23.05.2007
(73) Proprietor: Japan Polypropylene Corporation, Tokyo 100-8251 (JP)
(72) Inventor: ZANKA, Yukihito, Yokkaichi-shi, Mie (JP); ISHII, Izumi, Yokkaichi-shi, Mie (JP); MATSUOKA, Kenji, Yokkaichi-shi, Mie (JP)
(74) Representative: Vossius & Partner Patentanwälte Rechtsanwälte mbB
(86) International application number: PCT/JP2005/016438
(87) International publication number: WO 2006/028144

(56) References cited:
- JP-A- 3 135 431
- JP-A- 4 306 261
- JP-A- 10 100 144
- JP-A- 2002 079 515
- JP-A- 2002 302 554
- JP-A- 2004 018 796

## Description

### TECHNICAL FIELD

The present invention relates to a producing method for a polypropylene resin composition containing talc, excellent in mechanical properties, and a producing method capable producing the same economically.

### BACKGROUND TECHNOLOGY

Recently, in industrial components for example automotive parts such as bumper, instrument panel, door trim or pillar trim, polypropylene-based composite materials containing an organic filler such as talc or an elastomer are often employed because of excellent balance of physical properties and excellent molding property thereof.

In general, such polypropylene-based composite materials have been produced by melting and kneading a raw material polypropylene resin, an elastomer component, and an inorganic filler component (talc in most cases) in a two-axis kneader.

Recently, from the standpoint of energy saving for environmental protection and standpoint of reduction in production cost, it is being intended to adopt so-called in-line compounding process in which such melt kneading process is executed in an integral process continuous from the propylene polymerization process.

However, in executing such melt kneading, when air is present in the kneader, there results a drawback that a pressure applied for example from the hopper side of the kneader toward the outlet side is absorbed by a volume change of the air and such air pressure does not function effectively as a resin pressure toward the outlet of the kneader. For solving such drawback, it is proposed to degas the inorganic filler by compression (for example cf. Patent Reference 1). Also proposed is an in-line compound process technology of employing a specified compressed talc and executing an in-line compounding by an apparatus, constructed as an integral apparatus containing a polymerization apparatus and a kneading-granulating apparatus (for example cf. Patent Reference 2). In Examples of Patent Reference 2, a number of test pieces indicating "white spot" caused by an agglomerated block of the inorganic filler (cf. Table 1, "appearance") was measured, and the number of white spots could be reduced when a compression ratio of the inorganic filler was 3.0 or less, as indicated by the technical characteristics of the invention of Patent Reference 2, but the formation of white spots could not be suppressed when the compression ratio exceeded 3.0.

On the other hand, Patent Reference 1 discloses an effect of improving the dispersion state of talc, by employing compression-degassed talc of a compression ratio exceeding 3.0 and executing a melt kneading with such talc and a propylene resin, but Examples thereof utilizes a kneader (CIM-90, manufactured by Japan Steel Works, Ltd.) of a screw diameter of about 90 mm, and it is not verified whether the talc can be dispersed to a desired state in a kneader employed in recent large-scale facilities (for example Patent Reference 2 employs one having a screw diameter of 320 mm).
Patent Reference 1: JP-A-4-306261
Patent Reference 2: JP-A-2002-302554 (claims 1 and 6)

### DISCLOSURE OF THE INVENTION

### PROBLEMS THE INVENTION IS TO SOLVE

In consideration of the aforementioned drawbacks and also of new problems that, in case of an actual manufacture in a two-axis kneader of a scale utilized in the commercial production plant, an insufficient dispersion (formation of white spots) of the inorganic filler occurs even in a formulation not causing a problem in a relatively small-scaled kneader such as CIM-90 mentioned above since a large amount of resin is to be kneaded within a short time, and that a reduction in the level of compression in order to avoid the white spots increases the amount of involved air, thereby detrimentally affecting the productivity particularly in case of a large-scale kneader, an object of the present invention is to provide a talc-containing polypropylene resin composition, which is an in-line compound capable of solving such drawbacks but still free from white spots, and also to provide a producing method therefor.

### MEANS FOR SOLVING THE PROBLEMS

As a result of investigations undertaken by the present inventors to accomplish the object described above, it was found that the degassed-compressed talc, prepared by prior methods, contains agglomerates formed by an uneven compression at the degassed-compressing operation, and also found that the use of a specified degassed-compressed talc, featured in containing few compression agglomerates that are hard to crush even for a high compression rate, enables to provide a talc-containing polypropylene resin composition, which is an in-line compound but still is free from white spots resulting from the insufficient dispersion of talc, and the present invention has thus been made as follows:

The present invention relates to a producing method for a polypropylene resin composition comprising:
(A) a degassed-compressed talc which has a bulk specific gravity of from 0.3 to 1.0 and a compression rate of from 3.1 to 7.0, which is obtained by degassing and compressing talc having an average particle size of from 0.1 to 12 µm and a bulk specific gravity of from 0.1 to 0.5, and which contains a component of 1,000 µm or larger, when sieved by a ro-tap method, in a content of 15 wt% or less, wherein the average particle size is a value corresponding to a particle size at a cumulative value of 50 wt%, read on a cumulative particle size distribution curve measured by a laser type particle size distribution measuring instrument; and
(B) a polypropylene resin,
   the method comprising supplying an extruder, provided in a downstream side of a polymerization reactor for producing the polypropylene resin, with the polypropylene resin and the degassed-compressed talc, to execute a melt kneading.

In an embodiment of the above producing method for a polypropylene resin composition, the extrusion rate is 1,000 kg/hr or larger.

Further embodiments of the above producing method for a polypropylene resin composition are described in the claims and below.

The present description also describes the following items:
(1) A polypropylene resin composition including (A) a degassed-compressed talc having the following properties and (B) a polypropylene resin:
   wherein the component (A) is a degassed-compressed talc which has a bulk specific gravity of from 0.3 to 1.0 and a compression rate of from 3.1 to 7.0, which is obtained by degassing and compressing talc having an average particle size of from 0.1 to 12 µm and a bulk specific gravity of from 0.1 to 0.5, and which contains a component of 1,000 µm or larger, when sieved by a ro-tap method, in a content of 15 wt% or less.
(2)The polypropylene resin composition according to (1), wherein the degassed-compressed talc contains a component of a particle size larger than 2.8 mm, in a content of 0.3 wt% or less.
(3) The polypropylene resin composition according to (1) or (2), wherein (B) the polypropylene resin is a propylene-ethylene block copolymer or a propylene homopolymer, which have an ethylene content of 25 wt% or less and MFR within a range of from 3 to 300 g/10 min.
(4) The polypropylene resin composition according to any one of (1) to (3), which is obtained by a melt kneading with an extrusion rate of 1,000 kg/hr or larger.
(5) A polypropylene resin composition, which comprises (A) degassed-compressed talc having the following properties and (B) a polypropylene resin, and is obtained by a melt kneading with an extrusion rate of 1,000 kg/hr or larger:
   wherein the component (A) is a degassed-compressed talc which has a bulk specific gravity of from 0.3 to 1.0 and a compression rate of from 3.1 to 7.0, which is obtained by degassing and compressing talc having an average particle size of from 0.1 to 12 µm and a bulk specific gravity of from 0.1 to 0.5, and which contains a component of 1,000 µm or larger, when sieved by a ro-tap method, in a content of 15 wt% or less.

(5) A degassed-compressed talc, which has a bulk specific gravity of from 0.3 to 1.0 and a compression rate of from 3.1 to 7.0, is obtained by degassing and compressing talc having an average particle size of from 0.1 to 12 µm and a bulk specific gravity of from 0.1 to 0.5, and contains a component of 1,000 µm or larger, when sieved by a ro-tap method, in a content of 15 wt% or less.

### EFFECT OF THE INVENTION

The present invention enables, by employing a degassed-compressed talc, having specified bulk specific gravity and compression rate and containing few agglomerates of a large size resulting from an unevenness in compression, and by compounding with a polypropylene resin, to produce a polypropylene resin composition improved in mechanical properties such as a bending modulus and excellent in external appearance, and such polypropylene resin composition does not generate white spots resulting from an insufficient dispersion of talc while being an in-line compound.

### BRIEF DESCRIPTION OF THE DRAWING

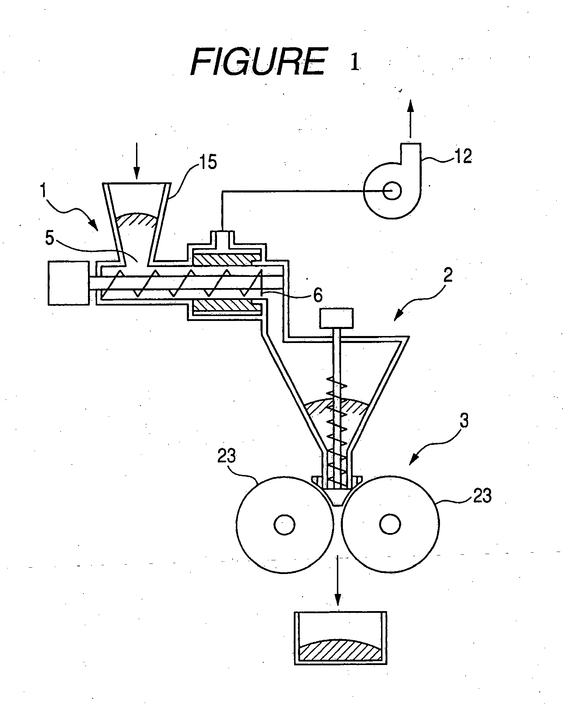

Fig. 1 is a view illustrating an example of an apparatus for degassed compression of talc.

### DESCRIPTION OF SYMBOLS

- 1: vacuum degassing apparatus
- 2: supplier
- 3: compression degassing apparatus
- 5: supply port
- 6: discharge port
- 12: vacuum pump
- 15: hopper
- 23: paired cylindrical rolls

### BEST MODES FOR CARRYING OUT THE INVENTION

The method of the present invention provides a talc-containing polypropylene resin composition, including (A) degassed-compressed talc and (B) a polypropylene resin. In the following, detailed descriptions will be given on the components, the producing method of the resin composition, and the applications of the resin composition.

### [I] Constituent components

### Component (A): degassed-compressed talc

The degassed-compressed talc to be employed in the present invention is a compressed talc which has a bulk specific gravity of from 0.3 to 1.0 and a compression rate of from 3.1 to 7.0, which is obtained by degassing and compressing talc having an average particle size of from 0.1 to 12 µm and a bulk specific gravity of from 0.1 to 0.5, which contains a component of 1,000 µm or larger, when sieved by a ro-tap method, in an amount of 15 wt% or less, which contains a component of 500 µm or larger in an improved sieving method, preferably in a content of 20 wt% or less, and which, when necessary, contains a component having a particle size of 2.8 mm or larger in a content of 0.3 wt% or less.

The talc to be employed in the present invention, prior to the degassed compression, has an average particle size of from 0.1 to 12 µm, preferably from 0.1 to 10 µm and more preferably from 2 to 8 µm. In the case of an average particle size exceeding the aforementioned range, the talc only provides a smaller improvement in the mechanical strength, thus resulting in a drawback, in a polypropylene resin composition formed by melt kneading, of a lowered bending modulus in a molded product. On the other hand, an average particle size smaller than the aforementioned range results in drawbacks not only of a deteriorated aspect ratio of talc because of an excessive crushing, but also of a crushing operation becoming uneconomically costly and liable to cause an insufficient dispersion.

The average particle size is a value corresponding to a particle size at a cumulative value of 50 wt%, read on a cumulative particle size distribution curve measured by a laser measuring instrument (for example LA900, manufactured by Horiba Ltd).

The talc to be employed in the present invention, prior to the degassed compression, has a bulk specific gravity of from 0.1 to 0.5, preferably from 0.11 to 0.35 and particularly preferably from 0.12 to 0.25. Also the talc to be employed in the present invention, after the degassed compression, has a bulk specific gravity of from 0.3 to 1.0, preferably from 0.4 to 0.9 and particularly preferably within a range equal to or larger than 0.45 but not exceeding 0.6. A bulk specific gravity exceeding this range is liable to generate agglomerates due to uneven compressing, thus being undesirable. On the other hand, a bulk specific gravity lower than this range increases the air amount brought into the two-axis kneader at the melt kneading and detrimentally affects the productivity, thus being undesirable.

The bulk specific gravity is measured according to JIK K-6720.

In the degassed and compressed talc to be employed in the present invention, a compression rate is from 3.1 to 7.0, preferably from 3.1 to 6.5 and particularly preferably from 3.2 to 5.5. A compression rate lower than the lower limit of this range increases the air amount brought into the two-axis kneader at the melt kneading, and results in drawbacks in the productivity such as a feed-neck phenomenon, thus being undesirable. On the other hand, a value higher than the upper limit of this range is liable to generate agglomerates due to uneven compressing, thus leading to a drawback of generating white spots resulting from agglomeration of talc in the molded product.

The compression rate is obtained by dividing the bulk specific gravity before degassed compression by the bulk specific gravity after degassed compression.

In the degassed and compressed talc to be employed in the present invention, a component of 1,000 µm or larger, when sieved by a ro-tap method, is in an amount of 15 wt% or less, preferably 13 wt% or less and further preferably 10 wt% or less. Also a component of 500 µm is in an amount of 45 wt% or less, preferably 40 wt% or less and more preferably 35 wt% or less. Large agglomerates of talc caused by uneven compression are preferably as little as possible. The component of 1,000 µm or larger, when sieved by a ro-tap method, present in an amount exceeding 15 wt% is undesirable, since white spots are generated in a product molded from pellets prepared by a large-scale kneader as having an extrusion rate for the propylene resin composition exceeding 1,000 kg/hr.

The ro-tap method means a method, in a ro-tap sieving shaker, of placing a sieve of 30 mesh (mesh aperture: 500 µm) having a diameter of 200 mmφ, and a depth of 45 mm and a sieve of 16 mesh (mesh aperture: 1,000 µm) of a same diameter thereon on a receiving dish, placing 100 g of talc on the uppermost sieve with a cover thereon, and shaking for 3 minutes under conditions of a shaking amplitude of 25 mm, a shaking number of 290 rpm and a hammer tapping rate of 156 rpm. A value obtained by such method has a significance as a scale for the amount of large talc agglomerates causing white spots in the molded product and for the dispersibility of talc agglomerates in the kneading.

The degassed and compressed talc to be employed in the present invention has a high compression rate and contains crude powder of 1,000 µm or larger, when sieved by a ro-tap method, in an amount of 15 wt% or less, but, a component amount measured by an "improved sieving method" with a higher measuring precision may also be defined when necessary.

More specifically, in the degassed and compressed talc to be employed in the present invention, a component of 500 µm or larger measured in an improved sieving method is preferably 20 wt% or less, more preferably 10 wt% or less and further preferably 5 wt% or less. A content outside such range generates white spots in case of melt kneading in a large kneader and is therefore undesirable. In order to reduce the agglomerates resulting from the uneven compression, it is important to precisely control the conditions of degassed compression of talc.

The improved sieving method is to measure a component of 500 µm or larger in a shaking for 3 minutes under conditions of a diameter of 150 mmφ, a shaking amplitude of 20 cm, and a shaking number of 60 cycle/minute, while preventing clogging by tapping twice a lateral face of the sieve at a height corresponding to the mesh at every shaking for 0.5 minutes.

The improved sieving method has characteristics of a larger shaking amplitude of the sieve and a smaller shaking number in comparison with the ro-tap method. Therefore the improved sieving method has a larger energy of collision when the agglomerates collide with each other or when the agglomerate collide with a wall of the sieve, and has a significance in preventing a decreased precision in the measured value such as, for example when the powder contains a high moisture content, an apparent increase in the amount of crude powder in the ordinary ro-tap method because of a higher strength of the agglomerates. A value obtained by such method has a significance as a scale for the amount of large talc agglomerates causing white spots in the molded product and for the dispersibility of talc agglomerates in the kneading.

In the present invention, the degassed and compressed talc of the component (A) preferably contains, for the purpose of preventing generation of white spots, a component having a particle size of 2.8 mm or larger in a content of 0.3 wt% or less, preferably 0.1 wt% or less. The degassed and compressed talc, containing a component having a particle size of 2.8 mm or larger in a content of 0.1 wt% or less, may be obtained, after degassed compression, by removing crude powder (2.8 mm or larger).

An example of the method for removing crude powder is a sieving method without destructing the compressed structure significantly, by a relatively coarse mesh. In such operation, the specific range of mesh is from 6.5 (mesh aperture: 2.8 mm) to 26 mesh (mesh aperture: 600 µm), preferably from 7.5 (mesh aperture: 2.36 mm) to 22 mesh (mesh aperture: 710 µm), and more preferably from 8.6 (mesh aperture: 2.0 mm) to 18.5 mesh (mesh aperture: 850 µm). A smaller mesh aperture exceeding this range hinders the productivity for talc processing, and a larger mesh aperture lower than this range results in an undesirably inferior effect for preventing the white spots.

The degassed and compressed talc employed in the present invention is characterized in satisfying the aforementioned requirements and, different from prior talc, is relatively uniformly densified for a high compression rate. Thus, because of absence of hysteresis of being subjected to a strong local compression, the talc shows extremely little "core part" so to speak, and is easily degraded and uniformly dispersed at the melt kneading, whereby the molded product shows no or very few white spots on the external surface. The talc with few agglomerates resulting from uneven compression, to be employed in the present invention, is not particularly restricted in the producing method thereof as long as the gist of the invention is not deviated, but can be produced for example by executing following steps (a) and (b) in continuation.

### (a) Degassing

The degassing can be executed by an apparatus and a method already known. For example, prior to compression with rollers, a preliminary degassing can be executed by a degassing volume-reducer such as Kuripack of Kurimoto Ltd. or Denspack of Hosokawa Micron Corp. A compressing operation is conducted as shown below, in continuation to the degassing process.

### (b) Compression

The compression can be executed with a known apparatus, but the operation conditions thereof have to be selected carefully. Also such conditions have not been specifically disclosed nor suggested in the prior technical references. The apparatus to be employed for compression may be a known apparatus, such as a roller (Roller Compactor manufactured by Kurimoto Ltd.).

As an apparatus to be employed in the present invention for executing (a) and (b) above in continuation, for the purpose of reducing agglomerates resulting from an uneven compression, employable is an apparatus illustrated in Fig. 1, as disclosed in JP-A-10-100144. Referring to Fig. 1, talc stored in a hopper 15 is fetched through a supply port 5 into a vacuum degassing apparatus 1, and is conveyed by a screw toward a discharge port 6 under degassing by a vacuum pump 12. The degassed talc drops from the discharge port 6 into a feeder 2, then pressed downwards by a screw, thus supplied to a compression-degassing apparatus 3 having a pair of cylindrical rolls 23, and discharged downwards under further compression and degassing between the rolls 23.

In this operation, it is important to select a gap of the illustrated cylindrical rolls as wide as possible, and the magnitude of the clearance is regulated within a range for example of from 0.8 to 2.0 mm. A small gap between the rolls generates a large pressure in the talc compressed between the rolls, thereby generating agglomerates which are difficult to degrade at the melt kneading. On the other hand, an excessively large gap results in a drawback that the talc passes through without being compressed. In this operation, it is preferable to suppress the revolution of the pressing screw by selecting a revolution of the rolls as high as possible while regulating the revolution within a range of from 5 to 20 rpm not hindering the balance in production. For achieving compression under such conditions, it is preferable to execute the degassed compression as far as possible at the preliminary degassing by the vacuum degassing apparatus.

The steps (a) and (b) above may be executed simultaneously.

The degassed and compressed talc (A) defined in the present invention may be subjected, for the purpose of improving an adhesive property with a polymer or a dispersibility, to a surface treatment for example with an organic titanate-type coupling agent, an organic silane coupling agent, a fatty acid, a fatty acid metal salt, or a fatty acid ester.

### Component (B): polypropylene resin

The polypropylene resin component (B) constituting the talc-containing polypropylene resin composition of the present invention is not particularly restricted, but is preferably a propylene-ethylene block copolymer having an ethylene content of 25 wt% or less, or a propylene homopolymer. In the propylene-ethylene block copolymer, an ethylene content exceeding 25 wt% results in a deteriorated rigidity.

The polypropylene resin is not restricted in the form thereof, but is preferably in a powder form in order to execute the blending and melt kneading process in an integral process from the polypropylene polymerization step.

The polypropylene resin component (B), to be employed in the talc-containing polypropylene resin composition of the invention, is not particularly restricted, but has a melt flow rate (MFR: under 230°C and a load of 2.16 kg) of from 3 to 300 g/10 min., preferably from 8 to 250 g/10 min., particularly preferably from 10 to 200 g/10 min., and most preferably from 20 to 100 g/10 min. A polypropylene resin component having an MFR lower than the aforementioned range shows an insufficient fluidity, thus requiring a molding apparatus with a high mold closing power in case of producing a thin molded article or a high molding temperature, thus detrimentally affecting the productivity. On the other hand, a polypropylene resin component having an MFR higher than the aforementioned range results in deterioration of characteristics such as impact resistance.

The MFR of the polypropylene resin component may be regulated at the polymerization, or by an addition of an organic peroxide such as a diacyl peroxide or a dialkyl peroxide after the exit of the polymerization reactor and before the melt kneading.

The MFR is a value measured according to JIS K-7210-1995.

The polypropylene resin (B) is preferably a propylene-ethylene block copolymer having an ethylene content of 25 wt% or less and having an MFR within a range of from 3 to 300 g/10 min., or a propylene homopolymer.

Such propylene-ethylene block copolymer is a block copolymer formed by a propylene homopolymer portion and a propylene-ethylene random copolymer portion, in which the polypropylene homopolymer portion preferably has an MFR of from 5 to 1,000 g/10 min., more preferably from 10 to 800 g/10 min., and particularly preferably from 30 to 500 g/10 min. Also the propylene homopolymer portion has an isotactic pentad rate preferably of 0.98 or higher, and more preferably 0.985 or higher. Also in the propylene homopolymer, the isotactic pentad rate (P) is preferably 0.98 or higher and more preferably 0.985 or higher.

In such propylene-ethylene block copolymer, an MFR in the propylene homopolymer portion lower than the aforementioned range results in an insufficient flowability, and an MFR exceeding the aforementioned range results in an inferior impact resistance. Also in the propylene homopolymer portion of the propylene-ethylene block copolymer or in the propylene homopolymer, an isotactic pentad rate (P) lower than the aforementioned range may result in an insufficient bending modulus.

The isotactic pentad rate (P) means an isotactic rate in the pentad unit in the polypropylene molecular chain, measured by ¹³C-NMR.

The polypropylene resin to be employed in the present invention may be obtained with various known catalysts, and, more specifically, a Ziegler-Natta catalyst or a metallocene catalyst already known may be utilized. As the Ziegler-Natta catalyst, employable is a high steric effect catalyst, and examples of producing method for Ziegler-Natta catalyst include a method of combining a titanium trichloride composition which is obtained by reducing titanium tetrachloride with an organic aluminum compound and further processing with various electron donating substances and electron accepting substances, with an organic aluminum compound and an aromatic carboxylic acid ester (cf. JP-A-56-100806, JP-A-56-120712 and JP-A-58-104907) and a method of producing a carrier-type catalyst by contacting magnesium halide with titanium tetrachloride and various electron donating substances (cf. JP-A-57-63310, JP-A-63-43915 and JP-A-63-83116).

The polypropylene resin can be obtained, in the presence of such catalyst, by polymerizing propylene and if necessary ethylene, by utilizing various process such as a gas-phase fluidized bed process, a solution process or a slurry process.

In the talc-containing polypropylene resin composition produced by the present invention, the blending proportion of the component (A) of degassed and compressed talc and the component (B) of polypropylene resin is such that, with respect to a total amount of the component (A) and the component (B), the component (B) is preferably present from 50 to 99 wt%, more preferably from 60 to 95 wt% and particularly preferably from 70 to 90 wt%. A blending amount lower than the aforementioned range increases the amount of talc, thus undesirably increasing the specific gravity. On the other hand, a blending amount exceeding the range results in an inferior impact resistance.

### (C) Additional component (arbitrary component)

In the talc-containing polypropylene resin composition produced by the present invention, in addition to the essential components (A) and (B), another additional component (arbitrary component) may be added within an extent not significantly deteriorating the effect of the present invention.

Examples of such an additional component (arbitrary component) include an ethylene-olefin copolymerized elastomer such as an ethylene-propylene copolymer, an ethylene-butene copolymer, or an ethylene-octene copolymer; a styrene-type elastomer such as SEBS or SEPS; a phenol-type or phosphorus-type antioxidant; an ahtiaging agent of hindered amine type, benzophenone type or benzotriazole type; a nucleating agent such as an organic aluminum compound or an organic phosphorus compound; a neutralizing agent represented by a metal salt of stearic acid; a dispersant; a colorant such as quinachridone, perylene, phthalocyanine, titanium oxide or carbon black; whiskers such as fibrous potassium titanate, fibrous magnesium oxysulfate, fibrous aluminum borate, or calcium carbonate; carbon fibers and glass fibers.

### [II] Producing method for talc-containing polypropylene resin composition

In the producing method for the polypropylene resin composition of the present invention, the polypropylene resin and the degassed and compressed talc are supplied to an extruder, provided in a downstream side of a polymerization reactor for producing the polypropylene resin, and are subjected to a melt kneading.

The talc-containing polypropylene resin composition is produced by a melt kneading in a large kneader having a large extrusion rate. In such operation, in order to enjoy a cost merit of in-line compounding, a transfer from the polymerization step, a preliminary blending step, a melt kneading step and a granulating step are preferably executed in an integral manner as described below.

The polypropylene resin produced in a polypropylene polymerization plant is transferred, through a pipeline, to a kneading/granulating facility. Then the transferred polypropylene resin (component (B)) is preliminarily mixed with the degassed and compressed talc (component (A)) having the aforementioned properties and, when necessary, with the additional component (component (C)). The preliminary mixer is not particularly restricted, and can be, for example, a batch type Henshell mixer, a tumbler mixer or a continuous powder mixer.

Then these components, after being blended, are melt kneaded by a large extruder, and are subjected to a cutting in a subsequent granulating step. In this operation, the extrusion rate of the resin composition has a lower limit of 1,000 kg/hr, preferably 2,000 kg/hr and more preferably 3,000 kg/hr. A low extrusion rate, lower than such lower limit, is undesirable in consideration of the economical property. On the other hand, an upper limit is not particularly restricted, but, in consideration of the magnitude of facilities already having results of operation, is preferably 20,000 kg/hr and more preferably 10,000 kg/hr. The kneader is not particularly restricted, and examples thereof include a single-axis kneader, a two-axis kneader, and a tandem-type kneader in which two axes and single axis (one axis) are combined. In consideration of the dispersion of talc, a tandem type kneader is preferable, and preferred is a method of executing a two-axis melt kneading followed by a melt kneading by a one-axis kneader.

### [III] Application of talc-containing polypropylene resin composition

The talc-containing polypropylene resin composition produced by the invention, being reinforced with talc, is a material having an excellent balance in the rigidity and the impact resistance and having a high dimensional stability, and can be worked into various molded products, for example in injection molded articles for automotive interior parts, particularly for a door trim, a pillar trim, a console box and for various housing materials.

### EXAMPLES

In the following, the present invention will be clarified in detail by examples, but the present invention is not limited to such examples. Measuring methods employed in Examples and Comparative Examples are as follows:

(1) Average particle size of talc: Measured with a laser type particle size distribution measuring instrument (LA920, manufactured by Horiba Ltd.).
(2) Bulk specific gravity of talc: Measured according to JIS K-6720.
(3) Amount of agglomerates by uneven compression in ro-tap method: In a ro-tap type sieving shaker (Ro-tap sieving shaker S-2, manufactured by Teraoka Co. in 1996), a sieve of 30 mesh having a diameter of 200 mmφ, and a depth of 45 mm and a sieve of 16 mesh of a same diameter thereon were placed on a receiving dish, then 100 g of talc were placed on the uppermost sieve with a cover thereon, and shaking was conducted for 3 minutes under conditions of a shaking amplitude of 25 mm, a shaking number of 290 rpm and a hammer tapping rate of 156 rpm. Then a weight of crude particles that did not pass through the meshes was determined from the change in the weight of dish, also the weight of the component of 1,000 µm or larger was determined from the sieving remainder of the sieve of 16-mesh and the weight of the component of 500 µm or larger was determined from the total sieving remainders of the sieves of 16-mesh and 30-mesh, and a ratio thereof was determined by a calculation.
(4) Amount of agglomerates by uneven compression in improving sieving method: On a receiving dish of a diameter of 150 mmφ, a sieve of 30 mesh of a same diameter was placed, and 10 g of talc were placed on the uppermost sieve with a cover thereon, and shaking was conducted for 3 minutes under conditions of a shaking amplitude of 20 cm, and a shaking number of 60 cycle/minute, while preventing clogging by tapping twice a lateral side of the sieve at every shaking for 0.5 minutes. Then a weight of crude particles that did not pass through the meshes was determined from the change in the weight of dish, also the weight of the component of 1,000 µm or larger was determined from the sieving remainder of the sieve of 16-mesh and the weight of the component of 500 µm or larger was determined from the total sieving remainders of the sieves of 16-mesh and 30-mesh, and a ratio thereof was determined by a calculation.
(5) MFR: Measured according to JIS K-7210-1995.
(6) Bending modulus: Measured according to JIS K-7203-1982.
(7) Evaluation on number of white spots: Pellets obtained by the melt kneading were charged in a hopper of an injection holding apparatus, and, after 10 shots for idle purging, the molding was started under following conditions, and 5 shots until the molding operation became stabilized were discarded and 6th to 15th shots were collected as samples. On the entire front and rear surfaces of the obtained article, white granular substances (called white spots) were observed visually and with a magnifying glass (16 times) with a scale, and a number of a size of the white spots were measured and evaluated according to the following criteria. The spots visually observable were counted and evaluated with a classification into a size of 0.6 mm or larger and a size equal to or larger than 0.4 mm but smaller than 0.6 mm.

### (Criteria of evaluation)

(-): spot of 0.6 mm or larger: 5 or more
(+): spot of 0.6 mm or larger: 4 or less
(++) : spot of 0.6 mm or larger: 4 or less, and spot of a size equal to or larger than 0.4 mm but smaller than 0.6 mm: 10 or less.

### (Molding conditions)

(a) product shape: a box shape with a longitudinal dimension of 345 mm, a transversal dimension of 200 mm and a height of 30mm, with a top face thickness of 2.5 mm and with a rough surface finish on all the rear surfaces;
(b) injection molding apparatus: IS170FII-10A, manufactured by Toshiba Machine Co.;
(c) mold: a 2-plate structure having a male mold and a female mold, in which a fixed mold (female) is used for the front surface of the product and a movable mold (male) is used for the rear surface of the product, and which has a structure of filling resin by a direct gate in a central part of the product;
(d) molding conditions: molding temperature: 220°C, mold temperature: 40°C, injection pressure: 100 MPa, holding pressure: 40 MPa, injection filling time: 7 seconds, pressure-holding time: 8 seconds, cooling time: 20 seconds, screw revolution: 150 rpm, screw rear pressure: none.

### (Example 1)

A finely powdered talc having an average particle size of 5.0 µm and a bulk specific gravity of 0.12 (MW5000S, manufactured by Hayashi Kasei Co.) (hereinafter referred to as raw material 1) was subjected to a primary degassing by Kuripack, manufactured by Kurimoto Ltd., to a bulk specific gravity of about 0.35, and then, without being taken out, subjected in succession to a secondary compression by a roller compactor manufactured by Kurimoto Ltd. (roller gap: 1.1 mm, roller revolution: 10 rpm, pressing screw: 17 rpm) to obtain a degassed and compressed talc (talc-1).

The talc-1 had a bulk specific density of 0.58, a component of 1,000 µm or larger measured by the ro-tap method in an amount of 5.5 wt%, and a component of 500 µm or larger in an amount of 35.9 wt%. Also an amount of component of 500 µm or larger measured by the improved sieving method was 3.4 wt%, indicating an extremely small amount of the agglomerates.

The talc-1 thus obtained was added, in a blending ratio shown in Table 2, to an ethylene-propylene block copolymer (PP-1: MFR = 30 g/10 min., rubber content: 13 wt%, ethylene content in rubber: 50 wt%, BC03EQ, manufactured by Japan Polypropylene Corp.), then 0.05 parts by weight of tetrakis[methylene-3-(3',5'-di-t-butyl-4'-hydroxyphenyl)propionate]methane (Irganox 1010, manufactured by Ciba Specialty Chemicals Inc.) and 0.4 parts by weight of calcium stearate were added as additives with respect to 100 parts by weight of polypropylene resin, and the mixture was subjected to a preliminary blending in a two-axis continuous powder mixer (screw diameter: 330 mm, L/D: 9) at a screw revolution of 30 rpm to obtain a resin composition.

In continuation, it was subjected to melt kneading and granulation in a combination of a two-axis kneader (CIM-320, manufactured by Japan Steel Works, Ltd.) and a one-axis kneader, thereby producing the desired talc-containing polypropylene resin composition.

The obtained pellets were injection molded and subjected to evaluation of white spots and measurements of physical properties. The physical properties of talc are shown in Table 1, and the results of evaluation of the resin composition are shown in Table 2.

### (Example 2)

A polypropylene resin composition was obtained by melt kneading under same conditions as in Example 1, except that PP-1 in Example 1 was replaced by a polypropylene homopolymer (PP-2; MFR = 6 g/10 min.; trade name MA4CQ; manufactured by Japan Polypropylene Corp.). The obtained pellets were injection molded, and subjected to an evaluation of white spots. Result is shown in Table 2.

### (Examples 3 to 5)

Degassed and compressed talcs (talc-2 and talc-3) were prepared by employing, among the producing conditions for the talc-1 in Example 1, a roll gap and a roll revolution same as in Example 1 but by regulating the revolution of the pressing screw only. The obtained talc was used in a formulation shown in Table 2 and subjected to blending, melt kneading and granulation in a method same as in Example 1, and white spots on a test sample was evaluated. The physical properties of talcs are shown in Table 1, and the results of evaluation of the resin compositions are shown in Table 2.

### (Comparative Examples 1, 5)

The raw material talc used in Example 1 was subjected to a primary degassing by Kuripack, manufactured by Kurimoto Ltd., to a bulk specific gravity of about 0.3, and then, without being taken out, subjected in succession to a secondary compression by a roller compactor manufactured by Kurimoto Ltd. (roller gap: 0.5 mm, roller revolution: 20 rpm, pressing screw speed: 16 rpm) to obtain degassed and compressed talc (talc-5). The talc-5 had a bulk specific density of 0.58, a component of 1,000 µm or larger measured by the ro-tap method in an amount of 22 wt%, and a component of 500 µm or larger in an amount of 53 wt%. Also an amount of component of 500 µm or larger measured by the improved sieving method was 31.8 wt%, indicating a large amount of the agglomerates. It was used in the formulation shown in Table 2, and subjected to blending, kneading and granulation in the identical manner as in Example 1 and the white spots were evaluated (Comparative Example 1). The physical properties of talc are shown in Table 1, and the results of evaluation of the resin composition are shown in Table 2.

Also, a degassed and compressed talc (talc-9) was prepared with a same roller gap and by regulating the roller revolution and the revolution of the pressing screw, and was used in the formulation shown in Table 2, and subjected to blending, kneading and granulation in the identical manner as in Example 1 and the white spots were evaluated (Comparative Example 5). The physical properties of talc are shown in Table 1, and the results of evaluation of the resin composition are shown in Table 2.

### (Comparative Example 2)

Thus produced talc-5 was used in the formulation shown in Table 2, followed by additions of 0.05 parts by weight of tetrakis[methylene-3-(3',5'-di-t-butyl-4'-hydroxyphenyl)propionate]methane (Irganox 1010, manufactured by Ciba Specialty Chemicals Inc.) and 0.4 parts by weight of calcium stearate as additives, and the mixture was uniformly blended and charged in a hopper of the kneader, and subjected to melt kneading and granulation in a combination of a two-axis kneader (CIM-90, manufactured by Japan Steel Works, Ltd.) and a one-axis extruder (P150-13ASW, manufactured by Japan Steel Works, Ltd.).

The obtained pellets were injection molded and subjected to evaluation of white spots (Comparative Example 2). Results of measurement of the resin composition are shown in Table 2. The talc-5 was free from white spots in case of a kneader such as CIM-90 (manufactured by Japan Steel Works, Ltd.), but generated white spots in case of granulation by a large kneader to be installed in a plant, such as CIM-320.

### (Comparative Example 3)

A degassed and compressed talc (talc-6) was prepared by employing, among the producing conditions for the talc-1 in Example 1, a roll gap and a roll revolution same as in Example 1 but by regulating the revolution of the pressing screw only. The obtained talc was used in a formulation shown in Table 2 and subjected to blending, melt kneading and granulation in a method same as in Example 1, and white spots on a test sample was evaluated. The physical properties of talc are shown in Table 1, and the results of evaluation of the resin composition are shown in Table 2.

### (Example 6)

Instead of the raw material 1, a finely powdered talc having an average particle size of 7.8 µm and a bulk specific gravity of 0.15 (trade name: Micro Ace P-2, manufactured by Nippon Talc Co.) was subjected to degassed compression by Kuripack, manufactured by Kurimoto Ltd., by employing a roll gap and a roll revolution same as in Example 1 and by regulating the revolution of the pressing screw only, thereby producing degassed and compressed talc (talc-4). The talc-4 had a bulk specific density of 0.56, a component of 1,000 µm or larger measured by the ro-tap method in an amount of 4.3 wt%, and a component of 500 µm or larger in an amount of 30.5 wt%. Also an amount of component of 500 µm or larger measured by the improved sieving method was 3.5 wt%, indicating an extremely small amount of the agglomerates. It was used in the formulation shown in Table 2, and subjected to blending, kneading and granulation in the identical manner as in Example 1 and the white spots were evaluated. The physical properties of talc are shown in Table 1, and the results of evaluation of the resin composition are shown in Table 2.

### (Comparative Example 4)

Instead of the raw material 1, a crude particle talc having an average particle size of 13 µm and a bulk specific gravity of 0.40 (trade name: MS, manufactured by Nippon Talc Co.) was subjected to compression by Kuripack, manufactured by Kurimoto Ltd. by employing a roll gap and a roll revolution same as in Example 1 and by regulating the revolution of the pressing screw only, thereby producing degassed and compressed talc (talc-7) The talc-7 had a bulk specific density of 0.6, a component of 1,000 µm or larger measured by the ro-tap method in an amount of 4.1 wt%, and a component of 500 µm or larger in an amount of 26 wt%. Also an amount of component of 500 µm or larger measured by the improved sieving method was 1.3 wt%, indicating an extremely small amount of the agglomerates. It was used in the formulation shown in Table 2, and subjected to blending, kneading and granulation in the identical manner as in Example 1 and the white spots were evaluated. The physical properties of talc are shown in Table 1, and the results of evaluation of the resin composition are shown in Table 2. This talc resulted in a low bending rigidity.

### (Comparative Example 6)

A commercially available compressed talc MW5000SMA (talc-10), manufactured by Hayashi Kasei Co., was used in the formulation shown in Table 2, and subjected to blending, melt kneading and granulation in the same manner as in Example 1 and the white spots on a test sample were evaluated. The physical properties of talc are shown in Table 1, and the results of evaluation of the resin composition are shown in Table 2.

### (Examples 7, 8)

A talc compressed in the same manner as in Example 1 was sieved with a sieve of 16-mesh to produce a degassed and compressed talc (talc-8). The talc-8 had a bulk specific density of 0.51, thus showing some decrease in the bulk specific gravity by the sieving but maintaining a bulk specific density comparable to that in the beginning, and showed excellent results in a component of 1,000 µm or larger measured by the ro-tap method in an amount of 0 wt%, and a component of 500 µm or larger in an amount of 28 wt%. Also an amount of component of 500 µm or larger measured by the improved sieving method was 0 wt%, indicating an extremely small amount of the agglomerates. It was used in the formulation shown in Table 2, and subjected to blending, kneading and granulation in the identical manner as in Example 1 and the white spots were evaluated. The physical properties of talc are shown in Table 1, and the results of evaluation of the resin composition are shown in Table 2.

**[Table 1]**

| | Average particle size (µm) | Ro-tap method, 1000 µm or larger (wt%) | Ro-tap method, 500 µm or larger (wt%) | Improved method, 500 µm or larger (wt%) | Bulk specific gravity before compression | Bulk specific gravity after compression | Compression rate | Component of 2.8 µm or larger (wt%) |
|---|---|---|---|---|---|---|---|---|
| talc-1 | 5.0 | 5.5 | 35.9 | 3.4 | 0.12 | 0.58 | 4.83 | 0.1 |
| talc-2 | 5.0 | 11.5 | 41.6 | 5.1 | 0.12 | 0.78 | 6.50 | 0.3 |
| talc-3 | 5.0 | 0.5 | 25.1 | 2.5 | 0.12 | 0.48 | 4.00 | 0.1 |
| talc-4 | 7.8 | 4.3 | 30.5 | 3.5 | 0.15 | 0.56 | 3.73 | 0.2 |
| talc-5 | 5.0 | 22.0 | 53.0 | 31.8 | 0.12 | 0.58 | 4.83 | 0.8 |
| talc-6 | 5.0 | 35.0 | 56.0 | 40.0 | 0.12 | 0.91 | 7.58 | 1.2 |
| talc-7 | 13.0 | 4.1 | 26.0 | 1.3 | 0.40 | 0.60 | 1.50 | 0.1 |
| talc-8 | 5.0 | 0.0 | 28.0 | 0.0 | 0.12 | 0.51 | 4.25 | 0.0 |
| talc-9 | 5.0 | 18.0 | 46.0 | 35.0 | 0.12 | 0.48 | 4.00 | 0.6 |
| talc-10 | 5.0 | 20.3 | 51.0 | 29.8 | 0.15 | 0.60 | 4.00 | 0.6 |

**[Table 2]**

| | | | Example | | | | | | | | Comparative Example | | | | | |
|---|---|---|---|---|---|---|---|---|---|---|---|---|---|---|---|---|
| | | | 1 | 2 | 3 | 4 | 5 | 6 | 7 | 8 | 1 | 2 | 3 | 4 | 5 | 6 |
| Formulation | PP-1 | wt% | 80 | - | 80 | 80 | - | 80 | 80 | - | 80 | 80 | 80 | 80 | - | 80 |
| | PP-2 | wt% | - | 80 | - | - | 60 | - | - | 60 | - | - | - | - | 60 | - |
| | Talc-1 | wt% | 20 | 20 | - | - | - | - | - | - | - | - | - | - | - | - |
| | Talc-2 | wt% | - | - | 20 | - | - | - | - | - | - | - | - | - | - | - |
| | Talc-3 | wt% | - | - | - | 20 | 40 | - | - | - | - | - | - | - | - | - |
| | Talc-4 | wt% | - | - | - | - | - | 20 | - | - | - | - | - | - | - | - |
| | Talc-5 | wt% | - | - | - | - | - | - | - | - | 20 | 20 | - | - | - | - |
| | Talc-6 | wt% | - | - | - | - | - | - | - | - | - | - | 20 | - | - | - |
| | Talc-7 | wt% | - | - | - | - | - | - | - | - | - | - | - | 20 | - | - |
| | Talc-6 | wt% | - | - | - | - | - | - | 20 | 40 | - | - | - | - | - | - |
| | Talc-9 | wt% | - | - | - | - | - | - | - | - | - | - | - | - | 40 | - |
| | Talc-10 | wt% | - | - | - | - | - | - | - | - | - | - | - | - | - | 20 |
| Granulation | Granulator | - | CIM320 | CIM320 | CIM320 | CIM320 | CIM320 | CIM320 | CIM320 | CIM320 | CIM320 | CIM90 | CIM320 | CIM320 | CIM320 | CIM320 |
| | Extrusion rate | t/hr | 6.3 | 5.3 | 5.5 | 5.2 | 4.9 | 6.2 | 6.1 | 5.3 | 5.3 | 0.3 | 5.9 | 6.5 | 4.9 | 5.2 |
| Physical properties | MFR | g/10 min | 27 | 5 | 28 | 29 | 4 | 27 | 27 | 5 | 28 | 26 | 27 | 28 | 5 | 27 |
| | Bending modulus | 2300 | 2300 | 2800 | 2290 | 2330 | 3950 | 2200 | 2320 | 4000 | 2280 | 2300 | 2270 | 2050 | 4050 | 2250 |
| | White spots | - | (+) | (+) | (+) | (+) | (+) | (+) | (++) | (+) | (-) | (+) | (-) | (+) | (-) | (-) |
| | Number of white spols (0.6 mm ≤) | number | 0 | 1 | 0 | 0 | 2 | 0 | 0 | 1 | 24 | 0 | 30 | 0 | 48 | 20 |
| | Number of white spots (0.4-0.6 mm) | number | 4 | 13 | 18 | 2 | 23 | 4 | 0 | 14 | 82 | 6 | 90 | 3 | 160 | 70 |

### INDUSTRIAL APPLICABILITY

The talc-containing polypropylene resin composition produced by the present invention is a material of high performance not causing defective dispersion of inorganic filler (generation of white dots), and can be worked into various molded products, for example in injection molded articles for automotive interior parts, particularly for a door trim, a pillar trim, a console box and for various housing materials.

## Claims

1. A producing method for a polypropylene resin composition comprising:
(A) a degassed-compressed talc which has a bulk specific gravity of from 0.3 to 1.0 and a compression rate of from 3.1 to 7.0, which is obtained by degassing and compressing talc having an average particle size of from 0.1 to 12 µm and a bulk specific gravity of from 0.1 to 0.5, and which contains a component of 1,000 µm or larger, when sieved by a ro-tap method, in a content of 15 wt% or less, wherein the average particle size is a value corresponding to a particle size at a cumulative value of 50 wt%, read on a cumulative particle size distribution curve measured by a laser type particle size distribution measuring instrument; and
(B) a polypropylene resin,
the method comprising supplying an extruder, provided in a downstream side of a polymerization reactor for producing the polypropylene resin, with the polypropylene resin and the degassed-compressed talc, to execute a melt kneading.

2. The producing method for a polypropylene resin composition according to claim 1, wherein an extrusion rate is 1,000 kg/hr or larger.

3. The producing method for a polypropylene resin composition according to claim 1 or 2, wherein the degassed-compressed talc contains a component having a particle size of 2.8 mm or larger in a content of 0.3 wt% or less.

4. The producing method for a polypropylene resin composition according to any one of claims 1 to 3, wherein the polypropylene resin component (B) is a propylene-ethylene block copolymer having an ethylene content of 25 wt% or less, or a propylene homopolymer.

5. The producing method for a polypropylene resin composition according to any one of claims 1 to 4, wherein the polypropylene resin component (B) has a melt flow rate (MFR: measured according to JIS K-7210-1995 at 230°C and a load of 2.16 kg) of from 3 to 300 g/10 min.

6. The producing method for a polypropylene resin composition according to any one of claims 1 to 5, wherein the blending proportion of the component (A) of degassed and compressed talc and the component (B) of polypropylene resin is such that, with respect to a total amount of the component (A) and the component (B), the component (B) is present from 50 to 99 wt%.

7. The producing method for a polypropylene resin composition according to any one of claims 1 to 6, comprising the following steps:
transferring the polypropylene resin (component (B)) produced in a polypropylene polymerization plant, through a pipeline to a kneading/granulating facility,
preliminarily mixing the transferred polypropylene resin with the degassed and compressed talc (component (A)) having the aforementioned properties and, when necessary, with an additional component (component (C)), and
melt kneading these components, after being blended, by a large extruder, and subjecting them to a cutting in a subsequent granulating step, wherein in this operation, the extrusion rate of the resin composition has a lower limit of 1,000 kg/hr.

## Patentansprüche

1. Ein Herstellungsverfahren für eine Polypropylenharzzusammensetzung, die:
(A) einen entgasten-komprimierten Talk, welcher eine Schüttdichte von 0,3 bis 1,0 und eine Komprimierungsrate von 3,1 bis 7,0 aufweist, welcher durch Entgasen und Komprimieren von Talk mit einer durchschnittlichen Teilchengröße von 0,1 bis 12 µm und einer Schüttdichte von 0,1 bis 0,5 erhalten wurde, und welcher eine Komponente von 1000 µm oder größer, wenn mittels eines Ro-Tap-Verfahrens gesiebt, in einem Anteil von 15 Gew.-% oder weniger enthält, wobei die durchschnittliche Teilchengröße ein Wert ist, der einer Teilchengröße bei einem kumulativen Wert von 50 Gew.-% entspricht, der auf einer kumulativen Teilchengrößenverteilungskurve, gemessen mittels eines Teilchengrößenverteilungsmessinstruments vom Lasertyp, abgelesen ist; und
(B) ein Polypropylenharz umfasst,
wobei das Verfahren Zuführen des Polypropylenharzes und des entgasten-komprimierten Talks einem Extruder, welcher auf der nachgeschalteten Seite eines Polymerisationsreaktors zur Herstellung des Polypropylenharzes angeordnet ist, zum Durchführen eines Schmelzknetens umfasst.

2. Das Herstellungsverfahren für eine Polypropylenharzzusammensetzung gemäß Anspruch 1, wobei eine Extrusionsrate 1000 kg/h oder größer ist.

3. Das Herstellungsverfahren für eine Polypropylenharzzusammensetzung gemäß Anspruch 1 oder 2, wobei der entgaste-komprimierte Talk eine Komponente mit einer Teilchengröße von 2,8 mm oder größer in einem Anteil von 0,3 Gew.-% oder weniger enthält.

4. Das Herstellungsverfahren für eine Polypropylenharzzusammensetzung gemäß einem der Ansprüche 1 bis 3, wobei die Polypropylenharzkomponente (B) ein Propylen-Ethylen-Blockcopolymer mit einem Ethylengehalt von 25 Gew.-% oder weniger oder ein Propylen-Homopolymer ist.

5. Das Herstellungsverfahren für eine Polypropylenharzzusammensetzung gemäß einem der Ansprüche 1 bis 4, wobei die Polypropylenharzkomponente (B) eine Schmelzflussrate (MFR: gemessen gemäß JIS K-7210-1995 bei 230°C und einer Beladung von 2,16 kg) von 3 bis 300 g/10 min aufweist.

6. Das Herstellungsverfahren für eine Polypropylenharzzusammensetzung gemäß einem der Ansprüche 1 bis 5, wobei das Mischungsverhältnis der Komponente (A) des entgasten und komprimierten Talks und der Komponente (B) des Polypropylenharzes, bezogen auf die Gesamtmenge der Komponente (A) und der Komponente (B), so gewählt ist, dass die Komponente (B) in 50 bis 99 Gew.-% vorliegt.

7. Das Herstellungsverfahren für eine Polypropylenharzzusammensetzung gemäß einem der Ansprüche 1 bis 6, umfassend die folgenden Schritte:
Überführen des Polypropylenharzes (Komponente (B)), hergestellt in einer Polypropylenpolymerisationsanlage, durch eine Pipeline zu einer Knet-/Granulierungseinrichtung,
Vormischen des überführten Polypropylenharzes mit dem entgasten und komprimierten Talk (Komponente (A)), welcher die zuvor genannten Eigenschaften aufweist, und, falls notwendig, mit einer zusätzlichen Komponente (Komponente (C)) und
Schmelzkneten dieser Komponenten, nach dem Mischen, durch einen großen Extruder, und
Unterwerfen derselben einem Schneiden in einem nachfolgenden Granulationsschritt, wobei in diesem Arbeitsgang die Extrusionsrate der Harzzusammensetzung eine untere Grenze von 1000 kg/h aufweist.

## Revendications

1. Procédé de production d'une composition de résine de polypropylène comprenant :
(A) un talc dégazé-comprimé ayant une densité apparente de 0,3 à 1,0 et un taux de compression de 3,1 à 7,0, obtenu par dégazage et compression d'un talc ayant une taille de particules moyenne de 0,1 à 12 µm et une densité apparente de 0,1 à 0,5, et qui contient un composant de 1000 µm ou plus, quand il est tamisé par une méthode Ro-tap, avec une teneur de 15 % en poids ou moins, dans lequel la taille des particules moyenne est une valeur correspondant à une taille de particules à une valeur cumulée de 50 % en poids, lue sur une courbe de distribution des tailles de particules cumulées mesurées par un instrument de mesure des distributions des tailles de particules de type laser ; et
(B) une résine de polypropylène,
le procédé comprenant l'alimentation d'une extrudeuse, située en aval d'un réacteur de polymérisation destiné à produire la résine de polypropylène, par la résine de polypropylène et le talc dégazé-comprimé, pour procéder à un malaxage à l'état fondu.

2. Procédé de production d'une composition de résine de polypropylène selon la revendication 1, dans lequel une vitesse d'extrusion est de 1000 kg/h ou plus.

3. Procédé de production d'une composition de résine de polypropylène selon la revendication 1 ou 2, dans laquelle le talc dégazé-comprimé contient un composant ayant une taille de particules de 2,8 mm ou plus à une teneur de 0,3 % en poids ou moins.

4. Procédé de production d'une composition de résine de polypropylène selon l'une quelconque des revendications 1 à 3, dans lequel le composant de résine de polypropylène (B) est un copolymère séquencé de propylène-éthylène ayant une teneur en éthylène de 25 % en poids ou moins, ou un homopolymère de propylène.

5. Procédé de production d'une composition de résine de polypropylène selon l'une quelconque des revendications 1 à 4, dans lequel le composant de résine de polypropylène (B) a un indice de fluidité à l'état fondu (MFR : mesuré selon JIS K-7210-1995 à 230 °C et une charge de 2,16 kg) de 3 à 300 g/10 min.

6. Procédé de production d'une composition de résine de polypropylène selon l'une quelconque des revendications 1 à 5, dans lequel la proportion de mélange du composant (A) de talc dégazé et comprimé et du composant (B) de résine de polypropylène est telle que, par rapport à la quantité totale du composant (A) et du composant (B), le composant (B) est présent à raison de 50 à 99 % en poids.

7. Procédé de production d'une composition de résine de polypropylène selon l'une quelconque des revendications 1 à 6, comprenant les étapes suivantes :
transfert de la résine de polypropylène (composant (B)) produite dans une unité de polymérisation de polypropylène, par une conduite jusqu'à une installation de malaxage/granulation,
mélange préliminaire de la résine de polypropylène transférée avec le talc dégazé et comprimé (composant (A)) ayant les propriétés susmentionnées et, quand nécessaire, avec un composant supplémentaire (composant (C)), et
malaxage à l'état fondu de ces composants, après leur mélange, par une extrudeuse de grande taille, et leur soumission à découpe dans une étape de granulation ultérieure, dans lequel, au cours de cette opération, la vitesse d'extrusion de la composition de résine a une limite inférieure de 1000 kg/h.
